# EUROPEAN PATENT APPLICATION

(11) **EP 1 780 511 A1**
(43) Date of publication of application: **02.05.2007**
(21) Application number: 05425760.5
(22) Date of filing: 28.10.2005
(51) Int. Cl.: G01C 22/02

(54) **Method and device for automatic calibration of the odometer of a vehicle.**

(71) Applicant: C.R.F. Societa Consortile per Azioni, 10043 - Orbassano (Torino) (IT)
(72) Inventor: Savio Walter c/o C.R.F. Società Consortile per Azi, 10043 Orbassano (IT)
(74) Representative: D'Angelo, Fabio

(57) **Abstract**

Described herein is a method of automatic calibration of the odometer (2) of a vehicle (3), in particular a motor vehicle, characterized in that it determines a first distance (*D_{ODO}*) travelled by the vehicle (1) on the basis of data supplied by the odometer (2) and a second distance (*D_{GPS}*) travelled by said vehicle (1) on the basis of data different from the ones supplied by said odometer (3) and of calibrating the odometer (2) on the basis of the first and second distances (*D_{ODO}, D_{GPS}*).

## Description

The present invention relates to a method and device for an automatic calibration of the odometer of a vehicle, in particular a motor vehicle.

As is known, an odometer is an instrument used for measuring the distance travelled by a vehicle as a function of the number of revolutions of the wheels of the vehicle and the distance travelled by the vehicle during one revolution of the wheels, which corresponds to the circumference of the wheels of the vehicle.

In particular, each of the front wheels of the vehicle is equipped with a sensor device supplying a train of pulses, in which each pulse corresponds to a fraction of revolution of the wheel itself. A computing unit receives at input the signals supplied by the sensor devices and, on the basis of the number of pulses and of the circumference of the wheels of the vehicle, determines the distance travelled by the vehicle, as well as its speed.

On the basis of what has been said above, it is evident how the precision of the measurement of the distance travelled by the vehicle is particularly sensitive to the variation in the circumference of the wheels of the vehicle, due to a set of factors that modify in time the characteristics of the wheels. Said factors are, for example, the total weight of the vehicle, the pressure and the wear of the tyres, the conditions of the road surface, etc.

To overcome the above drawback, it would consequently be necessary to calibrate the odometer periodically by measuring manually, at regular time intervals, the circumference of the wheels and updating said value within the computing unit. It is clear how such a manual calibration of the odometer is practically unrealizable, so that there is consequently felt the need to provide a method of automatic calibration of the odometer that will enable the latter to provide a measurement of the distance travelled by the vehicle that will remain precise and reliable over time.

The aim of the present invention is to provide a method and a device for automatic calibration of the odometer of a vehicle that will enable the requirements referred to above to be satisfied.

According to the present invention, a method and device for automatic calibration of the odometer of a vehicle, in particular a motor vehicle are provided, as defined in Claim 1 and, respectively, Claim 18, and a computer-program product, as defined in Claim 19.

For a better understanding of the present invention there is now described a preferred embodiment thereof, purely by way of non-limiting example, with reference to the attached drawings, wherein:
- Figure 1 is a schematic illustration of an automatic calibration device of the odometer of a motor vehicle according to the present invention; and
- Figure 2 shows a flowchart of the method for automatic calibration of the odometer according to the present invention.

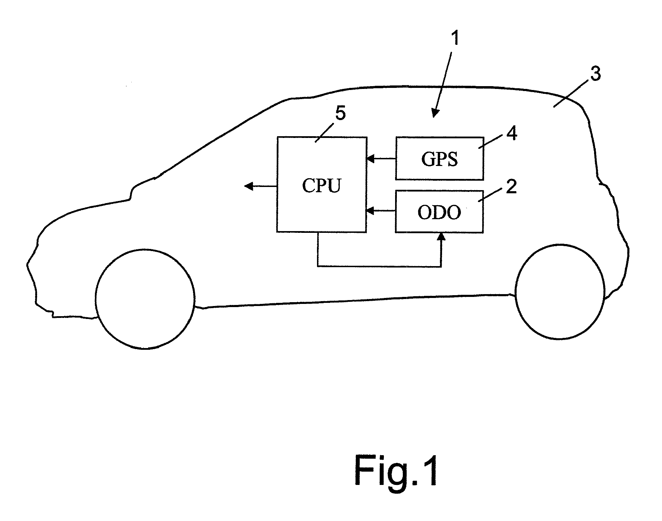

In Figure 1 designated as a whole by 1 is an automatic calibration device of the odometer 2 of a motor vehicle 3.
The calibration device 1 basically comprises a satellite location device 4 co-operating, in a way in itself known and not described in detail, with a satellite location system capable of determining its own absolute position on the surface of the earth.

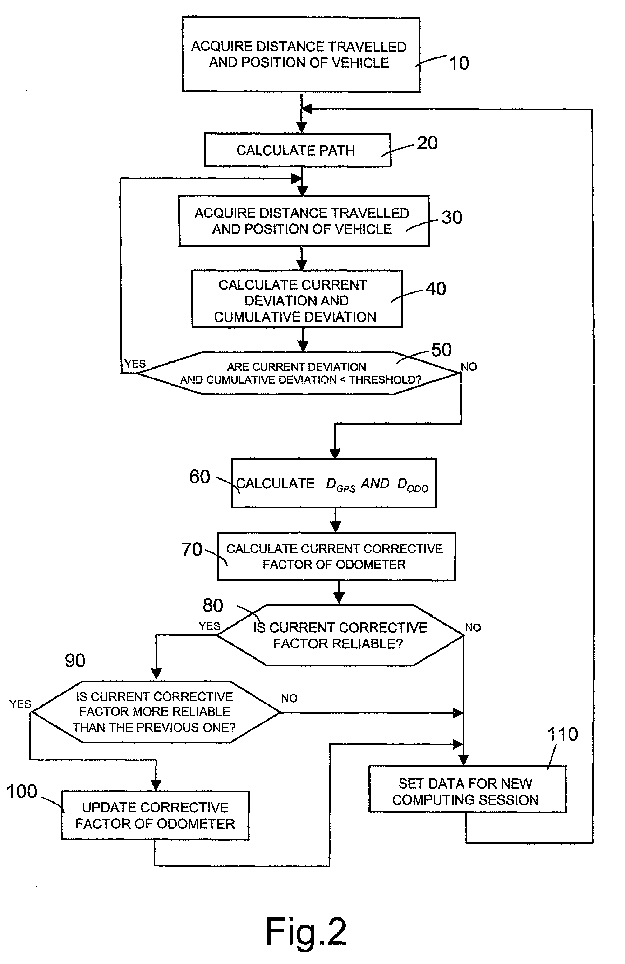

The calibration device 1 moreover comprises an electronic central processing unit (CPU) 5 connected to the odometer 2 and to the satellite location device 4 and implementing the method of automatic calibration of the odometer 2 described hereinafter with reference to the flowchart of Figure 2.

In particular, the electronic processing unit 5 acquires continuously, and stores temporarily in an internal memory of its own, pairs of values formed, each, by the current position of the vehicle 3, supplied by the satellite location device 4 at regular time intervals, for example once a second, and by the distance travelled by the vehicle 3 corresponding to said current position, supplied by the odometer 2 (block 10).

The electronic processing unit 5 then determines the (rectilinear) path of the vehicle 3 between the first two values acquired of the current position of the vehicle 3, in what follows designated by *Pos_{START}* and *Pos_{STOP},* and to do this determines the straight line passing through the positions *Pos_{START}* and *Pos_{STOP}* (block 20) .

Next, the electronic processing unit 5 verifies whether the subsequent current position of the vehicle 3 acquired in block 30, in what follows designated by *Pos_{CUR}*, lies or not on the straight line determined in the preceding point (block 40).

To do this, the electronic processing unit 5 determines first of all the straight line passing through the positions *Pos_{START}* and *Pos_{CUR}* (block 40), and then calculates:
- the deviation, referred to in what follows as current deviation *DEV_{CUR},* existing between the straight line passing through the positions *Pos_{START}* and *Pos_{CUR}* and the straight line passing through the positions *Pos_{START}* and *Pos_{STOP},* which could, for example, be defined by the angle formed by the straight lines passing through the points *Pos_{START}* and *Pos_{STOP}* and, respectively, *Pos_{START}* and *Pos_{CUR};* the current deviation *DEV_{CUR}* could moreover be calculated as the ratio between the distance of the point *Pos_{CUR}* from the straight line passing through the points *POS_{START}* and *Pos_{STOP}* and the distance between the points *Pos_{STOP}* and *Pos_{START} ;* and
- the deviation, referred to in what follows as cumulative deviation *DEV_{CUM},* which is defined as the absolute sum of all the current deviations *DEV_{CUR}* calculated.

Next, the electronic processing unit 5 compares the current deviation *DEV_{CUR}* and the cumulative deviation *DEV_{CUM}* with respective threshold values predefined and stored in the electronic processing unit 5 (block 50); for example, one degree for *DEV_{CUR}* and approximately ten degrees for *DEV_{CUM}* in the case where *DEV_{CUR}* is calculated as the angle formed by the straight lines passing through the points *Pos_{START}* and *POS_{STOP}* and, respectively, *Pos_{START}* and *Pos_{CUR}.* Said threshold values are chosen on the basis of parameters that depend substantially upon the characteristics of the vehicle.

If both current deviation *DEV_{CUR}* and the cumulative deviation *DEV_{CUM}* are less than the respective threshold values (output YES from block 50), then the electronic processing unit 5 determines that the position *Pos_{CUR}* lies on the straight line passing through the positions *POS_{START}* and *POS_{STOP}* (this condition being indicative of the fact that the vehicle 3 is moving along a substantially rectilinear path), so that the electronic processing unit 5 sets *Pos_{STOP} = Pos_{CUR}* and repeats the operations previously described with reference to blocks 30 and 50 for a new position *Pos_{CUR}* subsequent to the one so far considered, as long as the position *Pos_{CUR}* considered lies on the straight line passing through the positions *Pos_{START}* and *POS_{STOP},* i.e., as long as the vehicle 3 continuous to move along a substantially rectilinear path.

When, instead, the current deviation *DEV_{CUR}* or the cumulative deviation *DEV_{CUM}* exceeds the respective threshold value (output NO from block 50), then the electronic processing unit 5 determines that the position *Pos_{CUR}* does not lie on the straight line passing through the positions *Pos_{START}* and *Pos_{STOP}* (this condition being indicative of the fact that the vehicle 3 has changed path), so that it acquires the distances travelled by the vehicle 3, designated in what follows by *ODO_{START}* and *ODO_{STOP},* associated to the positions *Pos_{START}* and *Pos_{STOP}.*

At this point, the electronic processing unit 5 calculates a first distance travelled by the vehicle 3, designated in what follows by *D_{GPS},* as difference between the positions *Pos_{STOP}* and *Pos_{START}* supplied by the satellite location device 4, and a second distance travelled by the vehicle 3, designated in what follows by *D_{ODO},* as difference between the distances *ODO_{STOP}* and *ODO_{START}* supplied by the odometer 2 (block 60).

Next, the electronic processing unit 5 calculates a corrective factor *F_{COR}* for the odometer 2 as a function of the distance *D_{GPS}* and the distance *D_{ODO},* for example as ratio between the distances *D_{ODO}* and *D_{GPS}* (block 70).

Before proceeding to the calibration of the odometer 2 on the basis of the corrective factor *F_{COR}* just calculated, the electronic processing unit 5 evaluates the reliability of said corrective factor *F_{COR},* taking into consideration the conditions in which the corrective factor *F_{COR}* has been calculated, in particular evaluating the incidence of the error introduced by the odometer 2 on the measurement of the distance *D_{ODO},* the incidence of an absolute error GPS*_{ERR}* introduced by the satellite location device 4 on the position of the vehicle 3 and, consequently, on the calculation of the distance *D_{GPS},* and the incidence of the cumulative deviation *DEV_{CUM}* on the calculation of the distances.

For example, when the vehicle covers a distance *D_{GPS}* in rectilinear motion much greater than the mean error in distance introduced by the location system GPS*_{ERR},* (which is on average approximately more or less 10 metres) it is possible to obtain a corrective factor *F_{COR}* more precise than the current one with which the odometer is corrected in so far as, in this case, the error introduced by the location system is generally smaller than the current one of the odometer.

It should moreover be noted that the error of the odometer introduced, provided by the manufacturer, is on average equal to 3% and decreases only thanks to the first useful corrective factor *F_{COR}* obtained, passing, for example to 1%, but tends in any case again to increase with the passage of time, for example by 0.1% per month.

For this purpose, in the electronic processing unit 5 minimum values for the distance *D_{ODO}* could be stored, for example greater than 1 km (for which there is an error in the measurement of the distance *D_{GPS}* lower than 1%), below which the corrective factor *F_{COR}* is considered not reliable by the electronic processing unit 5 in so far as it is affected by an error that is no longer negligible, and for this reason rejected.

Next, the electronic processing unit 5 compares the reliability of the corrective factor *F_{COR}* just calculated with that of the corrective factor *F_{COR}* so far used by the odometer 2, taking also into consideration the time that has elapsed from the last updating of the corrective factor *F_{COR}* (block 90).

In the case where the corrective factor *F_{COR}* just calculated is considered less reliable than the corrective factor *F_{COR}* so far used by the odometer 2 (output NO from block 90), then the electronic processing unit 5 does not carry out any new calibration of the odometer 2 on the basis of the corrective factor *F_{COR}* just calculated, and block 90 is followed by a block 110, in which the electronic processing unit 5 sets the data necessary to start a new session of calculation of the corrective factor *F_{COR},* as described in detail in what follows.

If instead the corrective factor *F_{COR}* just calculated is considered more reliable than the corrective factor *F_{COR}* so far used by the odometer 2 (output YES from block 90), then the electronic processing unit 5 calibrates the odometer 2 by updating the corrective factor *F_{COR}* and storing its reliability and the date on which it has been calculated (block 100).

In either case, the electronic processing unit 5 then starts a new calculation of the corrective factor *F_{COR},* repeating the operations previously described with reference to blocks 20-90, having, however, first made the following assignments: *Pos_{STOP} **→** POS_{START},* i.e., the last position (*Pos_{STOP}*) lying on the preceding straight line becomes the initial position (*Pos_{START}*) of a new straight line representing the new path of the vehicle 3; and *Pos_{CUR} **→** Pos_{STOP},* i.e., the first position (*Pos_{CUR}*) not lying on the preceding straight line becomes the second position (*Pos_{STOP}*) of the new straight line (block 110).

The criteria on the basis of which the comparison is made between the reliability of the corrective factor *F_{COR}* just calculated and that of the corrective factor *F_{COR}* so far used by the odometer 2 can be multiple and are in general established by the manufacturer of the vehicle 3.

Some of these criteria could, for example, be based upon the comparison between the distances *D_{GPS}* on the basis of which the two corrective factors *F_{COR}* have been calculated, or else on the basis of the evaluation of the time that has elapsed or of the distance travelled by the vehicle 3 between the calculation of the two corrective factors *F_{COR},* giving more or less importance to the ones or to the others according to evaluations based upon experimental data.

Finally, it is clear that modifications and variations can be made to the method for automatic calibration of the odometer described and illustrated herein, without thereby departing from the sphere of protection of the present invention, as defined in the annexed claims.

## Claims

1. A method for automatic calibration of an odometer (2) of a vehicle (3), in particular a motor vehicle, **characterized in that** it comprises:
• determining a first distance (*D_{ODO}*) travelled by said vehicle (1) on the basis of data supplied by said odometer (2) ;
• determining a second distance (*D_{GPS}*) travelled by said vehicle (1) on the basis of data different from those supplied by said odometer (3);
• calibrating said odometer (2) on the basis of said first and second distances (*D_{ODO}, D_{GPS}*).

2. The method according to Claim 1, in which determining a second distance (*D_{GPS}*) comprises:
• determining the position of said vehicle (3); and
• determining said second distance (*D_{GPS}*) on the basis of the variation of the position of said vehicle (3).

3. The method according to Claim 1 or Claim 2, in which the position of said vehicle (1) is determined on the basis of data supplied by a location device (4) on board said vehicle (3).

4. The method according to Claim 3, in which said on-board location device is a satellite location device (4).

5. The method according to any one of the preceding claims, in which calibrating said odometer (2) comprises:
• determining a new corrective factor (*F_{COR}*) of the distance supplied by said odometer (2) on the basis of said first and second distances (*D_{ODO}, D_{GPS}*).

6. The method according to Claim 5, in which said corrective factor (*F_{COR}*) is correlated to the ratio between said first and second distances (*D_{ODO}, D_{GPS}*).

7. The method according to Claim 5 or Claim 6, in which calibrating said odometer (2) moreover comprises:
• evaluating the reliability of said corrective factor (*F_{COR}*) ;
• comparing the reliability of said corrective factor (*F_{COR}*) with the reliability of the corrective factor (*F_{COR}*) currently used for correction of the distance supplied by said odometer (2); and
• updating said corrective factor (*F_{COR}*) of said odometer (2) on the basis of the outcome of said comparison.

8. The method according to Claim 7, in which the reliability of said corrective factor (*F_{COR}*) is evaluated on the basis of said first and second distances (*D_{ODO}, D_{GPS}*).

9. The method according to Claim 7 or Claim 8, in which the outcome of said comparison depends upon:
• the relation existing between the second distance (*D_{GPS}*) on the basis of which the new corrective factor (*F_{COR}*) has been determined and the second distance (*D_{GPS}*), on the basis of which the corrective factor (*F_{COR}*) currently used has been determined;
• the interval of time that has elapsed between the calculation of the new corrective factor (*F_{COR}*) and the calculation of the corrective factor (*F_{COR}*) currently used; and
• the distance travelled by the vehicle (3) between the calculation of the new corrective factor (*F_{COR}*) and the calculation of the corrective factor (*F_{COR}*) currently used.

10. The method according to any one of the preceding claims, in which determining said second distance (*D_{GPS}*) comprises:
• determining the path of displacement of said vehicle (1) on the basis of the position of said vehicle (3);
• identifying a substantially rectilinear stretch in the path of displacement of said vehicle (1); and
• determining the length of said substantially rectilinear stretch.

11. The method according to Claim 10, in which identifying a substantially rectilinear stretch in the path of displacement of said vehicle (1) comprises:
a) acquiring a first and a second position (*Pos_{START}, Pos_{STOP}*) of said vehicle (1);
b) setting said first and second positions (*Pos_{START}, Pos_{STOP}*) as initial position and, respectively, as final position of said substantially rectilinear stretch;
c) determining a first straight line passing through said initial and final positions (*Pos_{START}, Pos_{STOP}*) ;
d) acquiring a current position (*Pos_{CUR}*) of said vehicle (1) ;
e) verifying whether said current position (*Pos_{CUR}*) lies substantially on said first straight line; and
f) setting said current position (*Pos_{CUR}*) as new final position (*Pos_{STOP}*) and repeating steps c)-f) as long as said current position (*Pos_{CUR}*) lies substantially on the first straight line.

12. The method according to Claim 11, when depending upon Claim 5, in which said new corrective factor is calculated when said current position (*Pos_{CUR}*) does not lie substantially on said first straight line.

13. The method according to Claim 11 or Claim 12, in which verifying whether said current position (*Pos_{CUR}*) lies substantially on said first straight line comprises:
• determining a current deviation (*DEV_{CUR}*) between said current position (*Pos_{CUR}*) and said first straight line.

14. The method according to Claim 13, in which determining a current deviation (*DEV_{CUR}*) between said current position (*Pos_{CUR}*) and said first straight line comprises:
• determining a second straight line passing through said current position (*Pos_{CUR}*) and one between said initial position (*Pos_{START}*) and said final position (*Pos_{START}*) ;
• determining a current deviation (*DEV_{CUR}*) existing between said first and second straight lines;
• comparing said current deviation (*DEV_{CUR}*) with a first threshold value; and
• establishing that said current position (*Pos_{CUR}*) lies substantially on said first straight line if said current deviation (*DEV_{CUR}*) and the first threshold value satisfy a first pre-set relation.

15. The method according to Claim 14, in which said current deviation (*DEV_{CUR}*) is defined by the angle formed between said first and second straight lines.

16. The method according to Claim 13, in which determining a current deviation (*DEV_{CUR}*) between said current position (*Pos_{CUR}*) and said first straight line comprises:
• determining a distance of said current position (*Pos_{CUR}*) from said first straight line;
• determining the distance existing between said first and second positions (*POS_{START}, Pos_{STOP}*) ;
• determining a current deviation (*DEV_{CUR}*) on the basis of the ratio between said distance of said current position (*Pos_{CUR}*) from said first straight line and said distance existing between said first and second positions (*Pos_{START}, Pos_{STOP}*) *;*
• comparing said current deviation (*DEV_{CUR}*) with a first threshold value; and
• establishing that said current position (*Pos_{CUR}*) lies substantially on said first straight line if said current deviation (*DEV_{CUR}*) and the first threshold value satisfy a first pre-set relation.

17. The method according to Claims 14 and 16, in which said first pre-set relation is defined by the condition that said current deviation (*DEV_{CUR}*) is smaller than the first threshold value.

18. The method according to any one of Claims 13 to 17, in which verifying whether said current position (*Pos_{CUR}*) lies substantially on said first straight line moreover comprises:
• determining a cumulative deviation (*DEV_{CUM}*) according to the current deviations (*DEV_{CUR}*) *;*
• comparing said cumulative deviation (*DEV_{CUM}*) with a second threshold value; and
• establishing that said current position (*Pos_{CUR}*) lies substantially on said first straight line if said cumulative deviation (*DEV_{CUM}*) and the second threshold value satisfy a second pre-set relation.

19. The method according to Claim 18, in which said second pre-set relation is defined by the condition that said cumulative deviation (*DEV_{CUM}*) is smaller than the second threshold value.

20. An automatic calibration device (1) of an odometer (2) of a vehicle (3), in particular a motor vehicle, **characterized in that** it is configured for implementing the method of automatic calibration according to any one of the preceding claims.

21. A computer-program product that can be loaded into the memory of a digital processor, said computer-program product comprising portions of software code that can implement the method according to any one of Claims 1 to 19 when the computer-program product is run on a digital processor.
